# EUROPEAN PATENT APPLICATION

(11) **EP 0 955 475 A1**
(43) Date of publication of application: **10.11.1999**
(21) Application number: 98107065.9
(22) Date of filing: 17.04.1998
(51) Int. Cl.: F16B 7/14

(54) **Connector for telescopic tube assembly**

(71) Applicant: Lin, C., Hua-Tan, Chang-Hua (TW)
(72) Inventor: Lin, C., Hua-Tan, Chang-Hua (TW)
(74) Representative: Olgemöller, Luitgard, Dr.

(57) **Abstract**

A connector for telescopic tube assembly comprises a connecting cylinder. The connecting cylinder includes a neck portion that is defined by a first and second diameters. A first and second space is defined above the first and second diameters, respectively. A locking flap is disposed at the joint between the first and second diameters and is free to move in the first or second space. Wherein when the locking flap is brought into the first space above the first diameter, the relative position between the daughter rod and the mother tube can be readily fixed. And wherein when the locking flap is brought into the second space above the second diameter, the daughter rod is free to move with respect to the mother tube.

## Description

### Field of the Invention

The present invention relates to a connector, more particularly, to a connector for telescopic tube assembly that can be readily arranged between two tubes that shall be connected in telescopic manner.

### Description of Prior Art

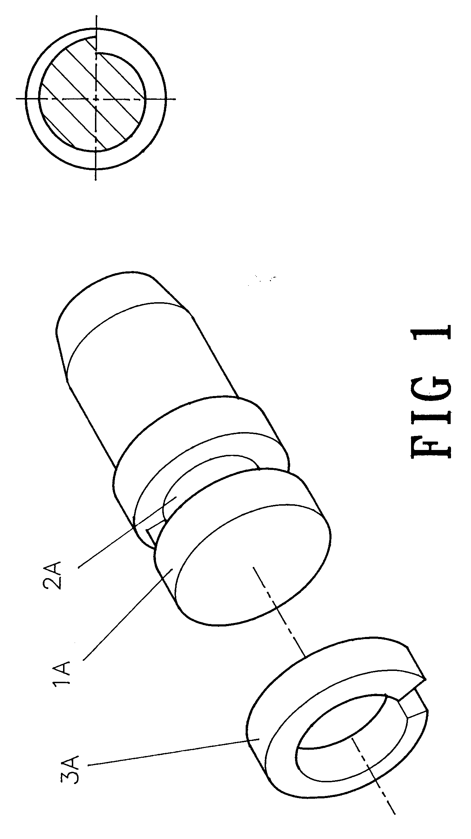

There is a plurality of telescopic connector in the existing market. However, the existing telescopic connector is too complex for actual application. Recently, a simplified telescopic connector, which utilizes eccentric cam, has been developed. As shown in Figure **1**, even the overall configuration has been simplified, the configuring elements are to undergo different and complex manufacturing processes. Basically, the connecting body **1A** that has an eccentric portion shall be firstly made. Then an eccentric adjusting collar **3A** is made thereafter. The connecting body **1A** includes a neck portion **2A** in which the eccentric adjusting collar **3A** is disposed therein. These manufacturing processes are too complicated and that can not reduce the overall manufacturing cost.

### Summary of the Invention

It is the objective of this invention to provide a telescopic connector that is integrally formed.

According to another aspect of the present invention, the telescopic connector made thereof features a simplified configuration and the manufacturing cost can be therefore reduced.

### Brief Description of Drawings

In order that the present invention may more readily be understood the following description is given, merely by way of example with reference to the accompanying drawings, in which:
- Figure **1**: is a perspective view of the conventional telescopic connector;
- Figure **2**: is a perspective view of the telescopic connector made according to the present invention;

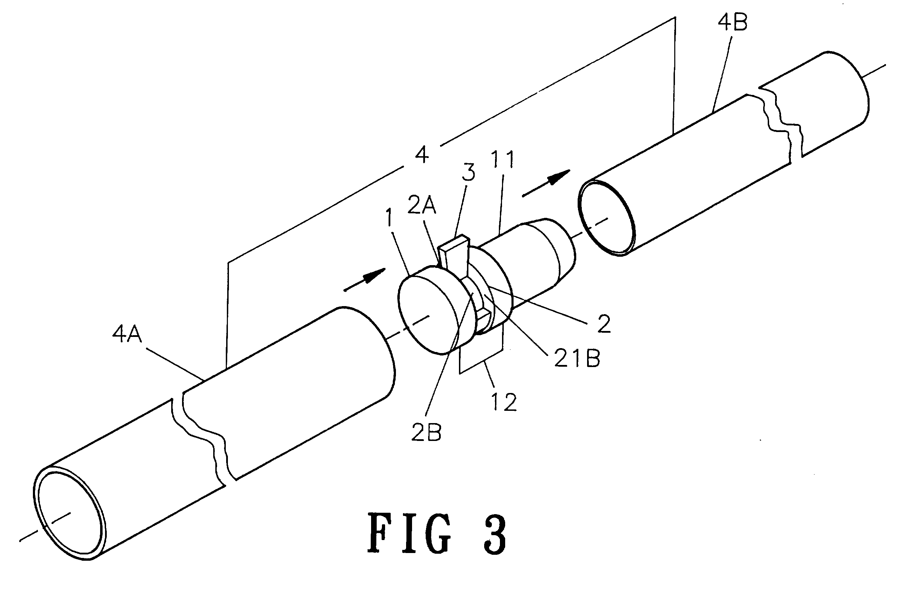

- Figure **3**: is an exploded view of the telescopic connector shown in Figure **2**;
- Figure **4**: is a schematic illustration showing the locking flap is not engaged; and
- Figure **5**: is still a schematic illustration showing the locking flap is engaged.

### Detailed Description of Preferred Embodiment

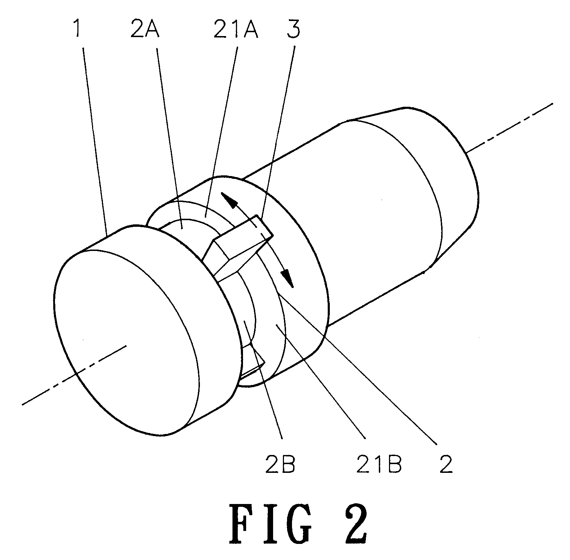

Referring to Figure **2**, the telescopic connector made according to the present invention generally comprises a connecting cylinder **1** that has a first end **11** and a second end **12**. The outer diameter of the second end **12** is larger than the first end **11**. The connecting cylinder **1** includes a neck portion **2** that is configured by a first and second diameters **2A**, **2B**. The first diameter **2A** is larger than the second diameter **2B**. A locking flap **3** that can match with the neck portion **2** is pivotally disposed between the joint between the first and second diameters **2A**, **2B**. The locking flap **3** is free to move into the first spaces **21A** or the second space **21B**, respectively The first space **21A** is smaller than the second space **21B**.

As shown in Figur**e 3**, the connector made according to the present invention is arranged between two tubes that are connected in telescopic manner. In use, the connecting cylinder **1** is firstly and fixedly inserted into one end of a daughter rod **4B** of the telescopic tube assembly 4 with its first end **11**. Then daughter rod **4B** together with the connecting cylinder **1** (including the second end 12 of the cylinder 1) is moveably inserted into the mother tube **4B** of the assembly **4**. By this arrangement, the daughter rod **4A** can be readily positioned with respect to the mother tube **4B** by means of the connecting cylinder **1**.

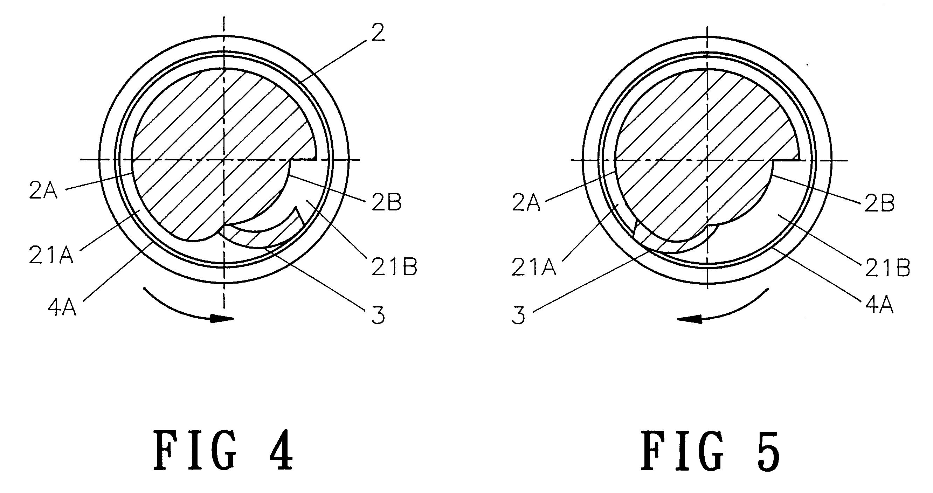

Referring to Figures **4** and **5**, when the daughter rod **4A** is pulled out from the mother tube **4B** and a certain length of the assembly **4** has been established by the daughter rod **4A** and mother rod **4B**, the mother tube **4B** can be rotated clockwise in a manner such that the locking flap **3** that is disposed at the joint between the first and second diameters **2A**, **2B** will be bent backward. As a result, the locking flap **3** is moved to the first space **21A** of the first diameter **2A** and engaged tightly thereof, as shown in Figure **5**. In this case, the thickness of the locking flap **3** pluses the first diameter **2A** is larger than the inner diameter of the mother tube **4B**, the connecting cylinder **1** is fixedly anchored on the inner wall of the mother tube **4B**. As a result, the relative position between the daughter rod **2A** and the mother tube **2B** is set.

When the relative position between the daughter rod **4A** and the mother tube **4B** is to change, the mother tube **4B** can be rotated counterclockwise with respect to the daughter rod **4A** in a manner such that the locking flap **3** is brought to the second diameter **2B** in which the second space **21B** located. In this case, the thickness of the locking flap **3** pluses the second diameter **2B** is smaller than the inner diameter of the mother tube **4B,** the daughter rod **4A** is free to move along the inner wall of the mother tube **4B**. As a result, the relative position between the daughter rod **2A** and the mother tube **2B** can be selected again. If the length established by the daughter rod **4A** and the mother tube **4B** is selected again, the mother tube **4B** can be rotated again with respect to the daughter rod **4A** to bring the locking flap **3** to the first space **21A** and the relative position between the daughter rod **4A** and the mother tube **4B** can be set again.

From the above description, it can be readily appreciated that the relative position between the daughter rod **4A** and the mother tube **4B** can be readily selected and set by the provision of the connecting cylinder **1**. Furthermore, the connecting cylinder **1** features a simplified configuration and can be integrally formed in a single manufacturing process. Not only will simplify the operation, but will also reduce the manufacturing cost considerably.

While particular embodiment of the present invention has been illustrated and described, it would be obvious to those skilled in the art that various other changes and modifications can be made without departing from the spirit and scope of the invention. It is therefore intended to cover in the appended claims all such changes and modifications that are within the scope of the present invention.

A connector for telescopic tube assembly comprises a connecting cylinder. The connecting cylinder includes a neck portion that is defined by a first and second diameters. A first and second space is defined above the first and second diameters, respectively A locking flap is disposed at the joint between the first and second diameters and is free to move in the first or second space. Wherein when the locking flap is brought into the first space above the first diameter, the relative position between the daughter rod and the mother tube can be readily fixed. And wherein when the locking flap is brought into the second space above the second diameter, the daughter rod is free to move with respect to the mother tube.

## Claims

1. A connector for telescopic tube assembly of the type that includes a mother tube and a daughter rod that is moveably disposed within said mother tube, said connector comprising a connecting cylinder that defines a first end and a second end, wherein said first end of said connecting cylinder can be fixedly attached to one end of said daughter rod and said second end of said connecting cylinder is moveably disposed within the inner space of said mother tube together with said daughter rod, said connecting cylinder further including a neck portion that is configured by a first and second diameters that in turn define a first space and second space there above, a locking flap that can match with said neck portion being pivotally disposed at the joint between said first and second diameters, wherein when said locking flap is brought into said first space above said first diameter, the relative position between said daughter rod and said mother tube can be readily fixed, and wherein when said locking flap is brought into said second space above said second diameter, said daughter rod is free to move with respect to said mother tube.

2. A connector as recited in claim 1, wherein said first diameter is larger than said second diameter.

3. A connector as recited in claim 1, wherein said first space is smaller than said second space.
